# EUROPEAN PATENT SPECIFICATION

(11) **EP 4 079 428 B1**
(45) Date of publication and mention of the grant of the patent: **04.10.2023**
(21) Application number: 22167904.6
(22) Date of filing: 12.04.2022
(51) Int. Cl.: B23B 13/12, B23B 13/08

(54) **CENTRING DEVICE FOR BARS**
ZENTRIERVORRICHTUNG FÜR STANGEN
DISPOSITIF DE CENTRAGE POUR BARRES

(30) Priority: 20.04.2021 IT 202100009965
(43) Date of publication of application: 26.10.2022
(73) Proprietor: Top Automazioni S.R.L., 47824 Poggio Torriana (RN) (IT)
(72) Inventor: BARGELLINI, Nicola, 47824 Poggio Torriana (RN) (IT); PISCAGLIA, Tomas, 47030 San Mauro Pascoli (FC) (IT)
(74) Representative: Luppi Intellectual Property S.r.l.

(56) References cited:
- EP-A1- 0 787 548
- GB-A- 647 777
- US-A- 4 034 632

## Description

### Background of the invention

The invention relates to a centring device for bars, in particular for centring bars that are fed to a machine tool.

Specifically, but not exclusively, the centring device in question can be usefully used between an automatic bar loader and a machine tool that is suitable for machining bars, like for example an automatic lathe.

In particular, reference is made to a centring device for bars configured to maintain a bar centred that during machining is fed by a bar loader to a machine tool configured to rotate the bar to perform the machining task, so as to drastically diminish oscillations and/or vibrations of the bar during rotation thereof.

Patent publications WO 2017/149446 A1 and WO 2017/149449 A1 disclose centring devices comprising movable jaws that define an adjustable passage gap of the bar, in which each jaw is slidable on a respective sliding guide that guides the jaw to perform sliding in a direction that is radial to the passage channel of the bar. Patent publication GB 647 777 A discloses a centring device according to the preamble of claim 1.

One of the problems of prior-art centring devices is to ensure a gentle, regular and secure movement in adjusting the centring elements, reducing the risk of excessive friction or even blocking or jamming. Another problem is that of ensuring a drastic reduction of the oscillations and/or vibrations of the bar during lathe machining, for bars of any diameter and/or any shape, in particular for bars with relatively reduced diameters and/or for bars with a hexagonal straight cross section.

### Summary of the invention

One object of the invention is to provide an alternative solution to centring bars fed to a machine tool.

One object of the invention is to devise a centring device for bars that is able to solve one or more of the aforesaid prior art problems.

One object of the invention is to improve known centring devices used to centre the bars during machine tool machining.

One advantage is to provide a centring device for bars that is of notable efficacy in maintaining the bar being machined centred between a bar loader and the spindle of the machine tool and to reduce the oscillations of the rotating bar.

One advantage is to make available a centring device for bars that is constructionally simple and cheap and relatively compact.

One advantage is to devise a centring device for bars that is suitable for guided transfer of a bar from a loader to a lathe that is able to limit with notable efficacy the vibrations of the rotating bar.

One advantage is to perfect a centring device for bars that permits a relatively high bar rotation regime.

One advantage is to provide a centring device for bars with an adjustable passage gap with a diameter that is variable on command.

One advantage is to devise a centring device for bars that is able to adapt simply and securely to bars of different formats (for example of different diameter and/or with different shape of the section).

One advantage is to provide a centring device for bars that is particularly effective for centring bars with a relatively reduced diameter and/or for bars with a straight cross section of hexagonal shape.

Such objects and advantages and still others are achieved by a centring device for bars according to one or more of the claims set out below.

In one embodiment, a centring device for bars comprises a centring axis, guide means provided that is with a hole to enable a bar to a pass along the centring axis, the guide means being able to rotate around said centring axis, a plurality of centring devices each provided with a wheel for centring the bar, pin-groove coupling means for coupling the centring devices with the guide means such that a rotation of the guide means causes a displacement of the wheels of the centring devices, whereby each wheel can adopt at least one proximal position and at least one distal position in which each wheel is, respectively, nearer to and further from the centring axis, so that the wheels define an adjustable passage for the bar that is narrower with the wheels in proximal position and is wider with the wheels in distal position, in which the centring device for bars further comprises actuating means configured to rotate the guide means and position the wheels selectively at least in the proximal and distal positions.

### Brief description of the drawings

The invention can be better understood and implemented with reference to the accompanying drawings that illustrate an embodiment by way of non-limiting example:

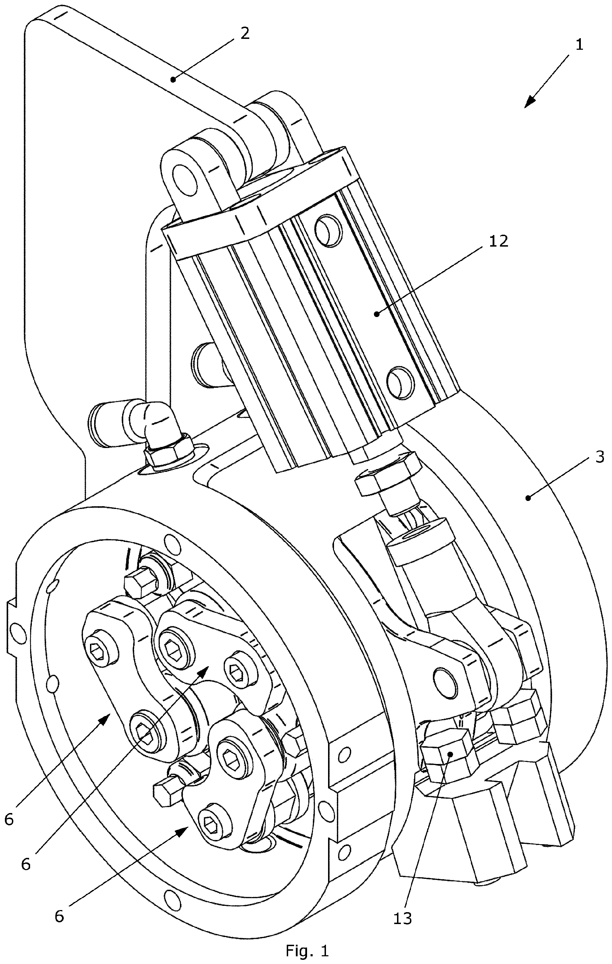

Figure 1 is a perspective view of an embodiment of a centring device for bars made in accordance with the invention;

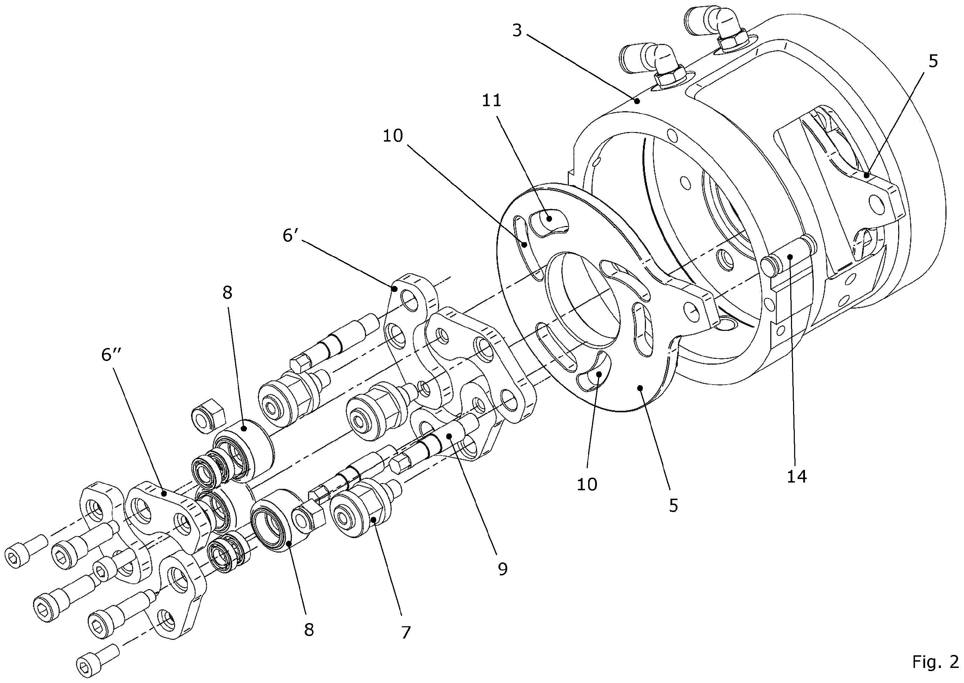

Figure 2 is an exploded view of a part of the centring device of Figure 1;

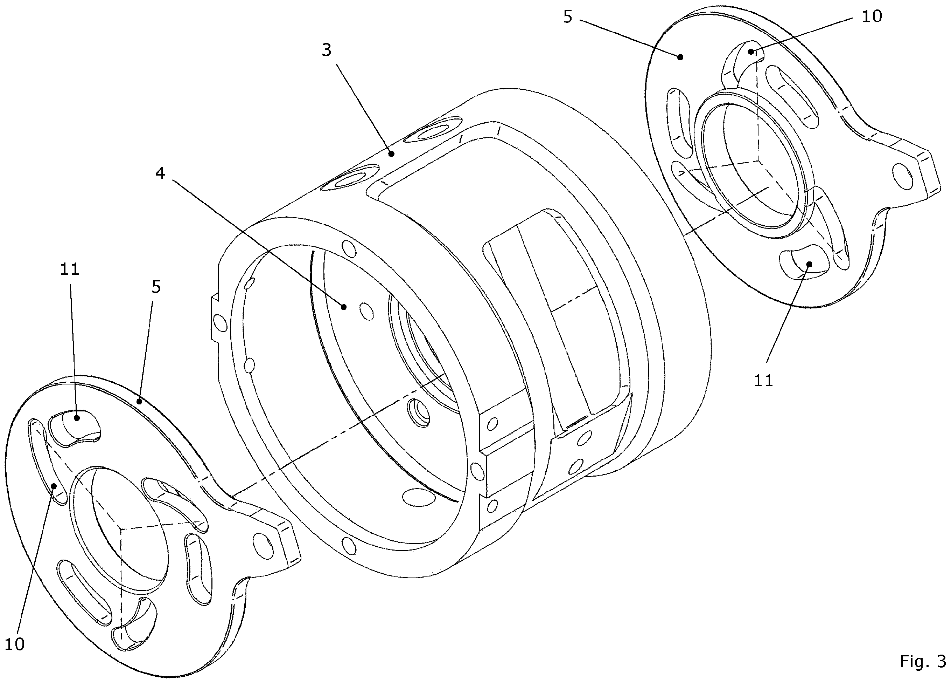

Figure 3 is an exploded view of some components of the centring device of Figure 1;
Figure 4 is a frontal view of the centring device of Figure 1 in a configuration in which the passage for the bar is relatively narrower;
Figure 5 is the view of Figure 4 with the centring device in a configuration in which the passage for the bar is relatively wider;

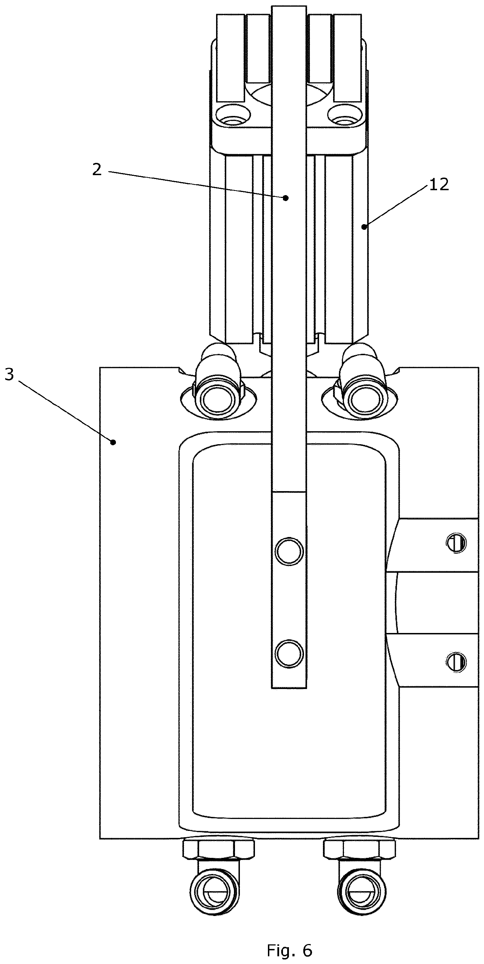

Figure 6 is a left-hand view of Figure 4;

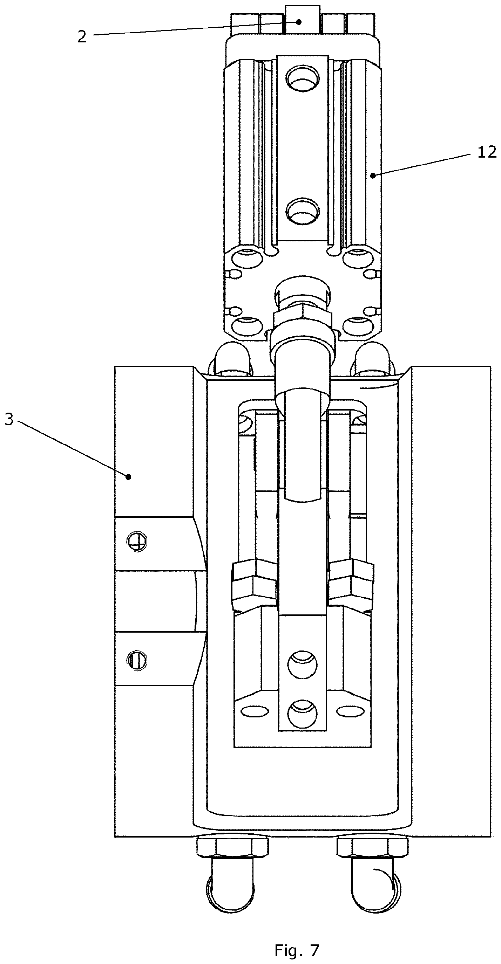

Figure 7 is a right-hand view of Figure 4;

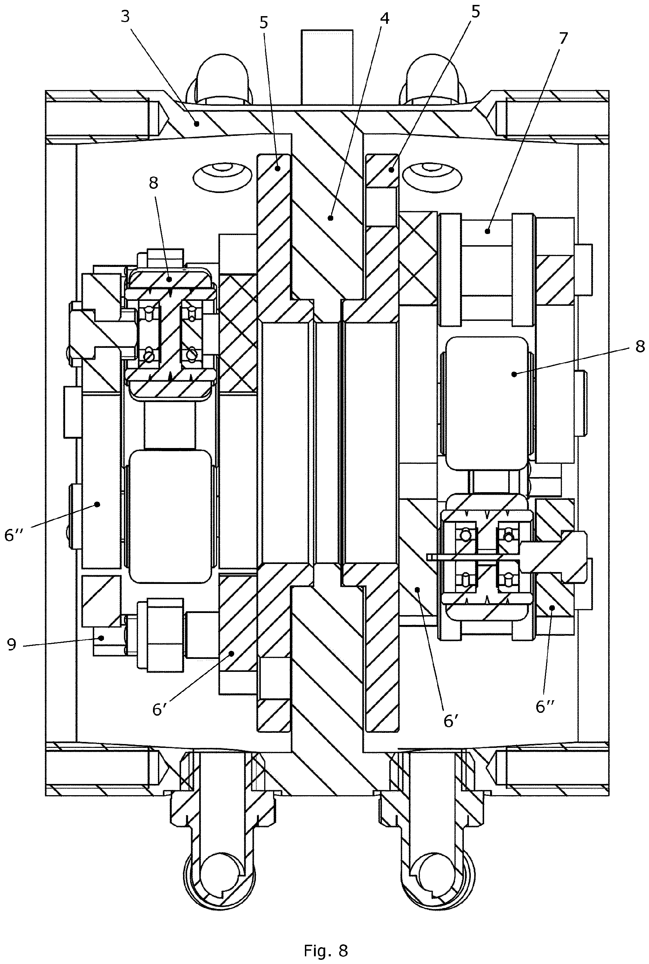

Figure 8 is a section of the centring device of Figure 1 taken along a vertical section plane passing through the centring axis of the bar.

### Detailed description

With reference to the aforesaid figures, overall, with 1 a centring device for a bar B has been indicated, in particular for a bar B that is fed by a bar loader to a machine tool, in particular a lathe, usable for performing machining tasks on the bar centred by the centring device. The centring device 1 may be arranged, in particular, between the bar loader and the machine tool.

The centring device 1 may comprise, in particular, a (for example horizontal) centring axis with respect to which a bar B is centred. The centring axis may be, in particular, coaxial with a feeding axis along which the bar B is fed by the bar loader arranged upstream of the centring device 1. The centring axis of the centring device 1 for bars and the feeding axis of the bar loader may coincide, in particular, with the longitudinal axis of the bar B. The centring axis may be, in particular, coaxial with a rotation axis (of a spindle) around which the bar B is machined by the machine tool arranged downstream of the centring device 1.

The centring device 1 may comprise, in particular, a frame 2. The frame 2 may comprise, in particular, a tubular body 3 and a diaphragm 4 inside the tubular body 3. The diaphragm 4 may be, in particular, arranged transversely to the aforesaid centring axis. The diaphragm 4 may be, in particular, provided with a central opening for the passage of the bar B.

The centring device 1 may an comprise, in particular, guide means 5. The guide means 5 may be, in particular, provided with a hole to enable a bar to pass along the centring axis. The guide means 5 may be, in particular, coupled with the frame 2 by a rotating torque with an axis coinciding with the centring axis. The guide means 5 may be, in particular, arranged on the frame 2 with the possibility of rotating around the centring axis.

The guide means 5 may comprise, in particular, disc means, like, for example, two discs arranged coaxially to one another. Each of the two discs may be, in particular, provided with a bar passage hole. The holes of the two discs may be, in particular, arranged aligned on one another so as to enable the bar to pass along the centring axis. Each of the two discs may be, in particular, arranged on the frame 2 with the possibility of rotating around the centring axis.

The two discs may be, in particular, distinct from one another (as in this specific embodiment), or may be integrated with one another so as to form a disc structure with two opposite faces.

The guide means 5 may be, in particular, rotatably coupled with the diaphragm 4 around a rotation axis coaxial with the centring axis. As in the specific embodiment, the guide means 5 comprises two discs that may be, in particular, arranged on two opposite sides of the diaphragm 4. The two discs may be, in particular, rotatably coupled with the diaphragm 4.

The centring device 1 may comprise, in particular, a plurality of rocker arms 6 coupled with the guide means 5. The rocker arms 6 may be, in particular, six in number (as in this embodiment). The rocker arms 6 may comprise, in particular, two groups of rocker arms, each of which is operationally associated with a respective disc, or with a respective face of disc means. Each group of rocker arms 6 may comprise, in particular, three rocker arms. The rocker arms 6 of each group of rocker arms may be, in particular, arranged angularly spaced apart from one another, for example spaced apart from one another in an angularly equidistant manner (in the specific case arranged at 120°).

It is possible to provide, as in this embodiment, for the rocker arms 6 of a group being arranged substantially coplanar to one another (in particular arranged on a plane orthogonal to the centring axis). In this embodiment, the centring device 1 comprises a first group of rocker arms 6 (in particular three in number) coplanar to one another (on a plane orthogonal to the centring axis) and a second group of rocker arms 6 (in particular three in number) coplanar to one another (on a plane orthogonal to the centring axis) and not coplanar with the first group of rocker arms 6, i.e. in which the plane of position of the first group of rocker arms 6 is not coplanar but is spaced away axially with respect to the plane of position of the second group of rocker arms 6.

The rocker arms 6 of a group of centring devices may be, in particular, arranged angularly staggered with respect to the rocker arms 6 of the other group of rocker arms, for example staggered by 60°, so as to form a total set of rocker arms 6 arranged spaced apart angularly (in particular, equidistant) from one another. In the specific embodiment, the set consists of rocker arms 6 spaced apart by 60° from one another.

Each of the aforesaid rocker arms 6 may be, in particular, rotatable on the frame 2 around a fulcrum 7. Each of the aforesaid rocker arms 6 may be, in particular, provided with a wheel 8 to promote centring of the bar B. Each wheel 8 may comprise, in particular, an outer cylindrical surface made of a material with a low friction coefficient, for example a coating made of plastics with a low friction coefficient and great resistance to wear. Each wheel 8 may be intended, in particular, for contact by rolling with the rotating bar during machining of the bar on the machine tool.

Each wheel 8 may be, in particular, rotatable in an idling manner around a respective rotation axis parallel to the centring axis.

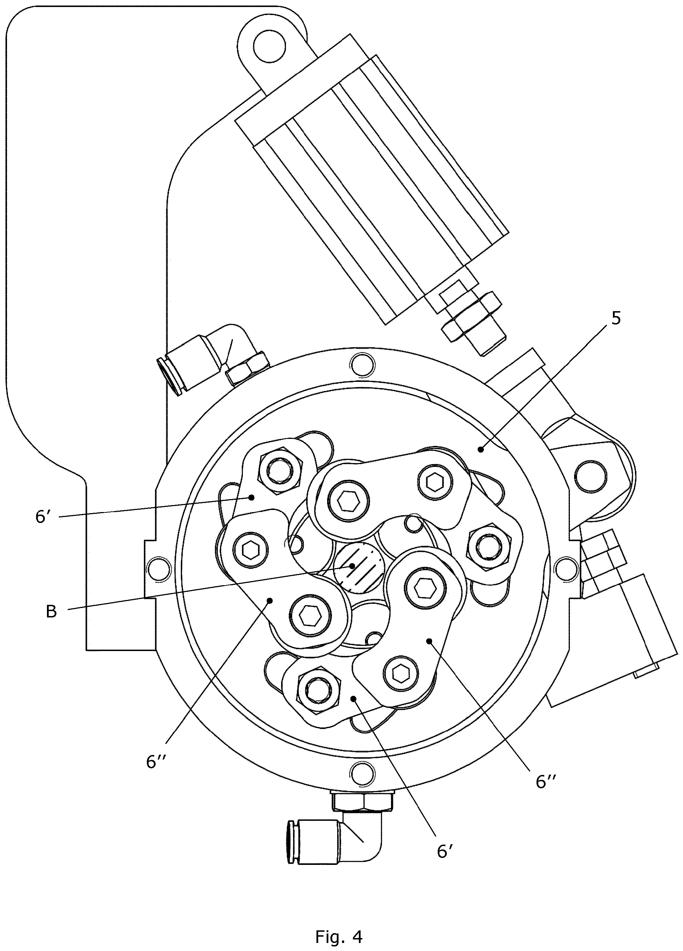

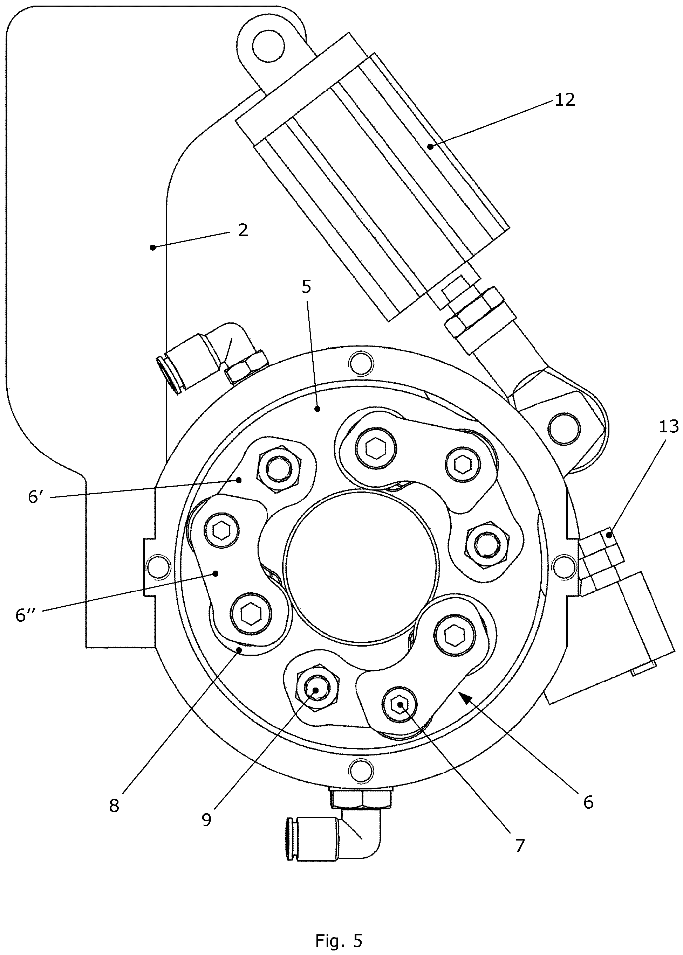

The centring device 1 may comprise, in particular, pin-groove coupling means configured to couple the guide means 5 with the rocker arms 6, such that a rotation of the guide means 5 causes, by a pin-groove coupling, a rotation of the rocker arms 6 around the respective fulcrum 7 and thus a displacement of the wheels 8 of the rocker arms 6 and, through the effect of the aforesaid displacement, each wheel 8 may adopt at least one proximal position (see for example in Figure 4) in which it is radially nearer the centring axis, and at least one distal position (see for example in Figure 5) in which it is radially further from the centring axis.

The drawings show two positions (proximal and distal) by way of example, it being possible that each wheel 8 adopts a multiplicity of other different positions in each of which the wheel will be positioned at a different radial distance from the centring axis.

The aforesaid displacement of the wheels 8, guided by the guide means 5, means that the wheels 8 can define an adjustable passage for the bar B that is narrower with the wheels 8 in proximal position and is wider with the wheels 8 in distal position.

The pin-groove coupling means may comprise, in particular, for each of the aforesaid rocker arms 6, a pin 9 carried by one end of the respective rocker arm 6 and slidingly coupled with a shaped groove 10 arranged on the guide means 5. Each shaped groove 10 may comprise, in particular, a shaped groove that extends with an arched shape and with a longitudinal extent having at least one component in a radial direction, where "radial" means with reference to the centring axis.

The pin 9 may be arranged, in particular, on a first end of the respective rocker arm 6 that is opposite a second end of the rocker arm 6 where the wheel 8 is arranged, with the fulcrum 7 that may be arranged, in particular, in an intermediate portion of the rocker arm 6 comprised between the first end and the second end.

The guide means 5 may comprise, in particular, for each rocker arm 6, at least one opening 11 for the passage of the respective fulcrum 7 around which the respective rocker arm 6 can be rotatable. Each opening 11 may comprise, in particular, an opening that extends along a circumference arch that may be, in particular, coaxial with the centring axis of the bar B. Each opening 11 permits in particular the rotation movement of the guide means 5 (at least by an angle size that is suitable for enabling the passage width of the bar B along the centring axis to be adjusted) around the centring axis without generating interference between the respective fulcrum 7 and the guide means 5.

Each rocker arm 6 may comprise, in particular, two members 6' and 6" coupled with one another and spaced apart from one another. Each rocker arm 6 may comprise, in particular, a first member 6' coupled with the guide means 5 by the aforesaid pin-groove coupling means, and a second member 6" parallel to and spaced apart from the first member 6'.

Each wheel 8 may be, in particular, rotatably coupled (in an idling manner) with the respective first member 6' and/or with the respective second member 6". In this embodiment, each wheel 8 is rotatably coupled both with the respective first member 6', and with the respective second member 6". Each wheel 8 may be, in particular, arranged between the respective first member 6' and the respective second member 6". The second member 6" may be, in particular, shorter than the first member 6'.

Each fulcrum 7, around which a respective rocker arm 6 is rotatable, may comprise, in particular, at least one portion arranged in a space between the respective first member 6' and the respective second member 6".

It is possible to provide, in particular, for each rocker arm 6, the respective fulcrum 7, around which the respective rocker arm 6 is rotatable, may comprise a pin axis that is parallel to the centring axis of the bar B.

The centring device 1 may comprise, in particular, actuating means 12 configured to rotate the guide means 5 at least so as to position the wheels 8 selectively in the aforesaid proximal and distal positions. The actuating means 12 may comprise, in particular, an actuator arranged to rotate the guide means 5, in particular to rotate the aforesaid two discs together. The actuator may comprise, in particular, a linear actuator. The actuating means 12 may comprise, in particular, fluid drive actuating means, although other types of drive are possible. The actuating means 12 may comprise, in particular, a hydraulic cylinder.

The centring device 1 may comprise, in particular, stop means 13 configured to interact in contact with an abutment element that is integral with a movable element (for example an abutment element that is integral with a cylinder piston) of the actuating means 12 to define a limit to a stroke of the aforesaid movable element. The aforesaid limit may be arranged, in particular, at a proximal position of the wheels 8, to facilitate the definition of the desired position of the rocker arms 6 and thus of the centring wheels 8 carried by the centring devices, i.e. to define the passage or channel width of the bar B through the centring device 1.

The centring device 1 may comprise, in particular, adjusting means for varying a position of the stop means 13 and/or of the aforesaid abutment element so as to vary the aforesaid limit, in order to adjust the stroke of the aforesaid movable element and thus adjust the transverse size of the passage or channel of the bar, with the possibility of adjusting size in function of the diameter of the bar B to be centred. The adjusting means may comprise, in particular, micrometric screw means or other types of adjusting means.

The guide means 5 may comprise, in particular, one or more appendages, each of which is coupled (for example by a rotatable coupling around a pin 14) with an end of a movable element of the actuating means 12. In particular, each disc may be provided with a respective appendage.

The tubular body 3 may be configured, in particular, to contain at least partly the guide means 5. The tubular body 3 may be configured, in particular, to contain at least partly the rocker arms 6.

The centring device 1 may be combined, in particular, with a loader for feeding bars (for example a loader of known type, which is not illustrated), in particular for feeding a bar B to a lathe, so that it is possible to provide a loader for feeding bars comprising the centring device 1 disclosed here.

In use, the bar B fed by the bar loader passes through the centring device 1 and thus from the centring device 1 arrives at the machine tool (which is not illustrated). Adjusting the width of the passage or channel of the bar B defined by the centring device 1 can be performed by driving the actuating means 12 that enables the passage or channel to be widened or narrowed of the bar that remains defined in the space comprised between the wheels 8. In particular, the actuating means 12 rotates the guide means 5 to cause an oscillation of the rocker arms 6 and thus position the wheels 8 at a desired radial distance from the centring axis, by virtue of the fact that the grooves 10 arranged on the guide means 5 interact with the pins 9 arranged on the first ends of the respective rocker arms 6, thus rotating the rocker arms 6 around the fulcrums 7 thereof, consequently displacing the wheels 8 to the desired position. The wheels 8 may be arranged, in particular, at the second ends of the rocker arms 6 opposite the first ends where the pins 9 coupled with the grooves 10 are located.

The bar B can be machined by the machine tool (lathe). During machining, the bar B can be rotated by the spindle of the machine tool around the longitudinal axis of the bar. The centring device 1 enables the bar to be maintained centred with respect to the rotation axis of the spindle, which may coincide with the centring axis and with the longitudinal axis of the bar. In particular, the wheels 8 of the centring device 1 are positioned in such a manner as to prevent or anyway significantly limit the oscillations and/or vibrations of the bar, ensuring relatively regular and silent operation.

The centring device 1 is relatively compact, in particular in an axial dimension, with the possibility of positioning near the lathe for greater operating stability and regularity. The centring device 1 is able to be easily fitted to any type of lathe fed by a bar loader. The centring device is extremely reliable in the task of maintaining the bar aligned on the centre of the feeding channel, i.e. at the centring axis.

The centring device 1 is particularly suitable for eliminating the vibrations on the workpiece, with a consequent increase of the working life of both the loader and the lathe.

The loader 1 is easy to assemble and dismantle. Further, the loader 1 preserves the surface of the bar from damage, in particular owing to the arrangement of a set of rotatable wheels (with surfaces with a low attrition coefficient) with a rotation axis parallel to the rotation axis of the bar. The centring device permits secure, reliable and precise centring, also in the case of hexagonal bars.

## Claims

1. Centring device (1), in particular for a bar (B) which is fed from a bar loader to a machine tool, said centring device comprising:
- a frame (2);
- guide means (5) provided with a hole to allow the passage of a bar (B) along a centring axis and arranged on said frame (2) with the possibility of rotating around said centring axis;
- rocker arms (6) coupled to said guide means (5), each of said rocker arms (6) being rotatable on said frame (2) around a fulcrum (7) and being provided with a wheel (8) for centring the bar (B);
- coupling means configured to couple said guide means (5) to said rocker arms (6) so that a rotation of said guide means (5) causes a displacement of the wheels (8) of said rocker arms (6) and that, due to the effect of said displacement, each wheel (8) can assume at least one proximal position in which it is radially closer to said centring axis, and at least one distal position in which it is radially more distant from said centring axis, whereby the wheels (8) define an adjustable passage for the bar (B) which is narrower with the wheels in proximal position and is wider with the wheels in distal position;
- actuator means (12) to rotate said guide means (5) at least to position said wheels (8) selectively in said proximal and distal positions;
**characterized in that** said coupling means comprises pin-groove coupling means.

2. Centring device according to claim 1, wherein said rocker arms (6) are six in number and are configured so that the respective six wheels (8) are angularly arranged equidistant from each other around said centring axis; the respective six wheels (8) being, in particular, arranged in two groups of three wheels each, in which the three wheels (8) of each group are coplanar with each other on respective lying planes orthogonal to said centring axis, with the respective lying planes axially spaced apart from each other.

3. Centring device according to claim 1 or 2, wherein said guide means (5) comprises two discs each provided with a hole, the holes of said two discs being arranged aligned with each other to allow the passage of the bar (B) along said centring axis, each of said two discs being arranged on said frame (2) with the possibility of rotating around said centring axis.

4. Centring device according to claim 3, wherein said actuator means (12) comprises an actuator arranged to rotate said two discs together; said actuator comprising, in particular, a linear actuator.

5. Centring device according to any one of the preceding claims, wherein said pin-groove coupling means comprises, for each of said rocker arms (6), a pin (9) carried by one end of the respective rocker arm (6) and slidingly coupled to a shaped groove (10) arranged on said guide means (5); said shaped groove (10) comprising, in particular, an arcuate-shaped groove with a longitudinal extension with at least one component in radial direction, "radial" with reference to said centring axis.

6. Centring device according to any one of the preceding claims, wherein said guide means (5) comprises, for each of said rocker arms (6), an opening (11) for the passage of the respective fulcrum (7) around which the respective rocker arm (6) is rotatable; said opening (11) comprising, in particular, an opening extended along an arc of circumference coaxial with said centring axis.

7. Centring device according to any one of the preceding claims, wherein each of said rocker arms (6) comprises a first member (6') coupled to said guide means (5) by means of said pin-groove coupling means and a second member (6") parallel and spaced apart from said first member (6'); each of said wheels (8) being, in particular, rotatably coupled to the respective first member (6') and/or to the respective second member (6").

8. Centring device according to claim 7, wherein each wheel (8) is arranged between the respective first member (6') and the respective second member (6"); said second member (6") being, in particular, shorter than said first member (6'); said fulcrum (7), around which the respective rocker arm (6) rotates, comprising, in particular, at least a portion of fulcrum arranged between said first member (6') and said second member (6").

9. Centring device according to any one of the preceding claims, wherein:
- each of said wheels (8) is idle rotatable around a respective rotation axis parallel to said centring axis; and/or
- for each of said rocker arms (6), the respective fulcrum (7), around which the respective rocker arm (6) is rotatable, comprises a fulcrum axis parallel to said centring axis.

10. Centring device according to any one of the preceding claims, comprising stop means (13) configured to interact in contact with an abutment element integral with a movable element of said actuator means (12) to define a limit to a stroke of said movable element; said limit being, in particular, at said proximal position of said wheels (8).

11. Centring device according to claim 10, comprising adjustment means for varying a position of said stop means (13) and/or of said abutment element so as to vary said limit; said adjustment means comprising, in particular, micrometric screw means.

12. Centring device according to any one of the preceding claims, wherein said frame (2) comprises a tubular body (3) and a diaphragm (4) inside said tubular body (3) and arranged transversely to said centring axis, said tubular body (3) containing at least in part said guide means (5), said diaphragm (4) being provided with a central opening for the passage of the bar (B), said guide means (5) being rotatably coupled to said diaphragm (4).

13. Loader for feeding bars to a lathe, comprising a centring device (1) according to any one of the preceding claims.

## Patentansprüche

1. Zentriervorrichtung (1), insbesondere für eine Stange (B), die von einem Stangenlader zu einer Werkzeugmaschine geführt wird, wobei die Zentriervorrichtung aufweist:
- einen Rahmen (2);
- Führungsmittel (5), die mit einem Loch versehen sind, um den Durchgang einer Stange (B) entlang einer Zentrierachse zu ermöglichen, und die an dem Rahmen (2) mit der Möglichkeit, sich um die Zentrierachse zu drehen, angeordnet sind;
- Wippenarmen (6), die mit den Führungsmitteln (5) gekoppelt sind, wobei jeder der Wippenarme (6) an dem Rahmen (2) um einen Angelpunkt (7) drehbar und mit einem Rad (8) zum Zentrieren der Stange (B) versehen ist;
- Kopplungsmittel, die dazu ausgebildet sind, die Führungsmittel (5) mit den Wippenarmen (6) zu koppeln, so dass eine Drehung der Führungsmittel (5) eine Verlagerung der Räder (8) der Wippenarme (6) verursacht, und dass aufgrund des Effekts der Verlagerung jedes Rad (8) zumindest eine proximale Position, in der es radial näher zu der Zentrierachse ist, und zumindest eine distale Position annehmen kann, in der es radial von der Zentrierachse entfernter ist, wodurch die Räder (8) einen einstellbaren Durchgang für die Stange (B) definieren, der schmaler ist, wenn die Räder in der proximalen Position sind, und weiter ist, wenn die Räder in der distalen Position sind;
- Aktuatormittel (12), um die Führungsmittel (5) zu drehen, zumindest um die Räder (8) wahlweise in der proximalen und der distalen Position zu positionieren;
**dadurch gekennzeichnet, dass** die Kopplungsmittel Stift-Nut-Kopplungsmittel aufweisen.

2. Zentriervorrichtung nach Anspruch 1, wobei die Wippenarme (6) sechs in der Anzahl sind und so ausgebildet sind, dass die entsprechenden sechs Räder (8) in äquidistantem Winkelabstand voneinander um die Zentrierachse angeordnet sind; wobei die entsprechenden sechs Räder (8) insbesondere in zwei Gruppen von jeweils drei Rädern angeordnet sind, wobei die drei Räder (8) jeder Gruppe koplanar zueinander auf entsprechenden liegenden Ebenen sind, die orthogonal zu der Zentrierachse verlaufen, wobei die entsprechenden liegenden Ebenen voneinander axial beabstandet sind.

3. Zentriervorrichtung nach Anspruch 1 oder 2, wobei die Führungsmittel (5) zwei Scheiben aufweisen, die jeweils mit einem Loch versehen sind, wobei die Löcher der zwei Scheiben miteinander fluchtend angeordnet sind, um den Durchgang der Stange (B) entlang der Zentrierachse zu ermöglichen, wobei jede der zwei Scheiben an dem Rahmen (2) mit der Möglichkeit, sich um die Zentrierachse zu drehen, angeordnet ist.

4. Zentriervorrichtung nach Anspruch 3, wobei die Aktuatormittel (12) einen Aktuator aufweisen, der dazu angeordnet ist, die zwei Scheiben zusammen zu drehen; wobei der Aktuator insbesondere einen Linearaktuator aufweist.

5. Zentriervorrichtung nach irgendeinem der vorhergehenden Ansprüche, wobei die Stift-Nut-Kopplungsmittel für jeden der Wippenarme (6) einen Stift (9) aufweisen, der von einem Ende des jeweiligen Wippenarms (6) getragen ist und gleitend mit einer geformten Nut (10) gekoppelt ist, die an den Führungsmitteln (5) angeordnet ist; wobei die geformte Nut (10) insbesondere eine bogenförmige Nut mit einer Längserstreckung mit zumindest einer Komponente in radialer Richtung aufweist, wobei "radial" sich auf die Zentrierachse bezieht.

6. Zentriervorrichtung nach irgendeinem der vorhergehenden Ansprüche, wobei die Führungsmittel (5) für jeden der Wippenarme (6) eine Öffnung (11) für den Durchgang des jeweiligen Angelpunktes (7) aufweisen, um den der jeweilige Wippenarm (6) drehbar ist; wobei die Öffnung (11) insbesondere eine Öffnung aufweist, die sich entlang eines Umfangsbogens, der mit der Zentrierachse koaxial ist, erstreckt.

7. Zentriervorrichtung nach irgendeinem der vorhergehenden Ansprüche, wobei jeder der Wippenarme (6) ein erstes Glied (6'), das mit den Führungsmitteln (5) mittels der Stift-Nut-Kopplungsmittel gekoppelt ist, und ein zweites Glied (6") aufweist, das parallel zu und von dem ersten Glied (6') beabstandet ist; wobei jedes der Räder (8) insbesondere drehbar mit dem jeweiligen ersten Glied (6') und/oder dem jeweiligen zweiten Glied (6") gekoppelt ist.

8. Zentriervorrichtung nach Anspruch 7, wobei jedes Rad (8) zwischen dem jeweiligen ersten Glied (6') und dem jeweiligen zweiten Glied (6") angeordnet ist; wobei das zweite Glied (6") insbesondere kürzer ist als das erste Glied (6'); wobei der Angelpunkt (7), um den sich der jeweilige Wippenarm (6) dreht, insbesondere zumindest einen Angelpunktabschnitt aufweist, der zwischen dem ersten Glied (6') und dem zweiten Glied (6") angeordnet ist.

9. Zentriervorrichtung nach irgendeinem der vorhergehenden Ansprüche, wobei:
- jedes der Räder (8) um eine jeweilige Drehachse parallel zu der Zentrierachse frei drehbar ist; und/oder
- für jeden der Wippenarme (6) der jeweilige Angelpunkt (7), um den der jeweilige Wippenarm (6) drehbar ist, eine Angelpunktachse parallel zu der Zentrierachse aufweist.

10. Zentriervorrichtung nach irgendeinem der vorhergehenden Ansprüche, mit Stoppermitteln (13), die dazu ausgebildet sind, in Berührung mit einem Anlageelement, das mit einem beweglichen Element der Aktuatormittel (12) integral ausgebildet ist, wechselzuwirken, um eine Grenze für einen Hub des beweglichen Elements zu definieren; wobei die Grenze insbesondere an der proximalen Position der Räder (8) ist.

11. Zentriervorrichtung nach Anspruch 10, mit Einstellmitteln zum Variieren einer Position der Stoppermittel (13) und/oder des Anlageelements, um die Grenze zu variieren; wobei die Einstellmittel insbesondere Mikrometer-Schraubmittel aufweisen.

12. Zentriervorrichtung nach irgendeinem der vorhergehenden Ansprüche, wobei der Rahmen (2) einen rohrförmigen Körper (3) und eine Scheidewand (4) innerhalb des rohrförmigen Körpers (3) und quer zur Zentrierachse angeordnet aufweist, wobei der rohrförmige Körper (3) zumindest teilweise die Führungsmittel (5) beinhaltet, wobei die Scheidewand (4) mit einer zentralen Öffnung für den Durchgang der Stange (B) versehen ist, wobei die Führungsmittel (5) drehbar mit der Scheidewand (4) gekoppelt sind.

13. Lader zum Zuführen von Stangen zu einer Drehbank, mit einer Zentriervorrichtung (1) nach irgendeinem der vorhergehenden Ansprüche.

## Revendications

1. Dispositif de centrage (1), en particulier pour une barre (B) qui est amenée d'un chargeur de barres à une machine-outil, ledit dispositif comprenant :
- un châssis (2) ;
- des moyens de guidage (5) pourvus d'un trou pour permettre le passage d'une barre (B) le long d'un axe de centrage et arrangés sur ledit châssis (2) avec la possibilité de tourner autour dudit axe de centrage ;
- des bras oscillants (6) couplés auxdits moyens de guidage (5), chacun desdits bras oscillants (6) étant rotatif sur ledit châssis (2) autour d'un pivot (7) et étant pourvu d'une roue (8) pour le centrage de la barre (B) ;
- des moyens de couplage configurés pour coupler lesdits moyens de guidage (5) auxdits bras oscillants (6) de sorte qu'une rotation desdits moyens de guidage (5) cause un déplacement des roues (8) desdits bras oscillants (6) et qu'en raison de l'effet dudit déplacement, chaque roue (8) puisse adopter au moins une position proximale dans laquelle elle est radialement plus proche dudit axe de centrage, et au moins une position distale dans laquelle elle est radialement plus éloignée dudit axe de centrage, moyennant quoi les roues (8) définissent un passage ajustable pour la barre (B) qui est plus étroit avec les roues dans la position proximale et plus large avec les roues dans la position distale ;
- des moyens d'actionnement (12) pour tourner les moyens de guidage (5) au moins pour positionner lesdites roues (8) sélectivement dans lesdites positions proximale et distale ;
**caractérisé en ce que** lesdits moyens de couplage comprennent des moyens de couplage à broche-rainure.

2. Dispositif de centrage selon la revendication 1, dans lequel lesdits bras oscillants (6) sont au nombre de six et sont configurés de sorte que les six roues (8) respectives soient équidistantes angulairement les unes des autres autour dudit axe de centrage ; les six roues (8) respectives étant en particulier arrangés en deux groupes de trois roues chacun, dans lequel les trois roues (8) de chaque groupe sont coplanaires les unes par rapport aux autres sur des plans de situation respectifs orthogonaux audit axe de centrage, avec les plans de situation respectifs espacés axialement les uns des autres.

3. Dispositif de centrage selon la revendication 1 ou 2, dans lequel lesdits moyens de guidage (5) comprennent deux disques pourvus chacun d'un trou, les trous desdits deux disques étant alignés l'un sur l'autre pour permettre le passage de la barre (B) le long dudit axe de centrage, chacun desdits deux disques étant arrangé sur ledit châssis (2) avec la possibilité de tourner autour dudit axe de centrage.

4. Dispositif de centrage selon la revendication 3, dans lequel lesdits moyens d'actionnement (12) comprennent un actionneur arrangé pour tourner lesdits deux disques ensemble ; ledit actionneur comprenant, en particulier, un actionneur linéaire.

5. Dispositif de centrage selon l'une quelconque des revendications précédentes, dans lequel lesdits moyens de couplage à broche-rainure comprennent, pour chacun desdits bras oscillants (6), une broche (9) portée par une extrémité du bras oscillant (6) respectif et couplée de manière coulissante à une rainure profilée (10) arrangée sur lesdits moyens de couplage (5) ; ladite rainure profilée (10) comprenant, en particulier, une rainure de forme arquée avec une extension longitudinale avec au moins un composant dans la direction radiale, "radiale" en référence audit axe de centrage.

6. Dispositif de centrage selon l'une quelconque des revendications précédentes, dans lequel lesdits moyens de guidage (5) comprennent, pour chacun desdits bras oscillants (6), une ouverture (11) pour le passage du pivot (7) respectif autour duquel le bras oscillant (6) respectif est rotatif ; ladite ouverture (11) comprenant, en particulier, une ouverture allongée le long d'un arc de circonférence coaxial par rapport audit axe de centrage.

7. Dispositif de centrage selon l'une quelconque des revendications précédentes, dans lequel chacun desdits bras oscillants (6) comprend un premier organe (6') couplé auxdits moyens de guidage (5) à l'aide desdits moyens de couplage à broche-rainure et un deuxième organe (6") parallèle audit premier organe (6') et espacé de celui-ci ; chacune desdites roues (8) étant, en particulier, couplée de manière rotative au premier organe (6') respectif et/ou au deuxième organe (6") respectif.

8. Dispositif de centrage selon la revendication 7, dans lequel chaque roue (8) est arrangée entre le premier organe (6') respectif et le deuxième organe (6") respectif ; ledit deuxième organe (6") étant, en particulier, plus court que ledit premier organe (6') ; ledit pivot (7) autour duquel le bras oscillant (6) respectif tourne comprenant, en particulier, au moins une partie de pivot arrangée entre ledit premier organe (6') et ledit deuxième organe (6") .

9. Dispositif de centrage selon l'une quelconque des revendications précédentes, dans lequel :
- chacune desdites roues (8) est apte à tourner à vide autour d'un axe de rotation respectif parallèle audit axe de centrage ; et/ou
- pour chacun desdits bras oscillants (6), le pivot (7) respectif autour duquel le bras oscillant (6) respectif est rotatif comprend un axe de pivot parallèle audit axe de centrage.

10. Dispositif de centrage selon l'une quelconque des revendications précédentes, comprenant des moyens d'arrêt (13) configurés pour interagir en contact avec un élément de butée d'un seul tenant avec un élément mobile desdits moyens d'actionnement (12) pour définir une limite à une course dudit élément mobile ; ladite limite étant, en particulier, à ladite position proximale desdites roues (8).

11. Dispositif de centrage selon la revendication 10, comprenant des moyens d'ajustement pour faire varier une position desdits moyens d'arrêt (13) et/ou dudit élément de butée de manière à faire varier ladite limite ; lesdits moyens d'ajustement comprenant, en particulier des moyens à vis micrométriques.

12. Dispositif de centrage selon l'une quelconque des revendications précédentes, dans lequel ledit châssis (2) comprend un corps tubulaire (3) et un diaphragme (4) à l'intérieur dudit corps tubulaire (3) et arrangé transversalement audit axe de centrage, ledit corps tubulaire (3) contenant au moins en partie lesdits moyens de guidage (5), ledit diaphragme (4) étant pourvu d'une ouverture centrale pour le passage de la barre (B), lesdits moyens de guidage (5) étant couplés de manière rotative audit diaphragme (4).

13. Chargeur pour amener des barres jusqu'à un tour, comprenant un dispositif de centrage (1) selon l'une quelconque des revendications précédentes.
